Europäisches Patentamt

European Patent Office

Office européen des brevets

(19)

(11) Publication number: **0 165 441 B1**

## EUROPEAN PATENT SPECIFICATION

(12)

(45) Date of publication of patent specification: **04.03.92**   (51) Int. Cl.⁵: **G09G 1/28**, G09G 1/16

(21) Application number: **85105720.8**

(22) Date of filing: **10.05.85**

(54) **Color image display apparatus.**

(30) Priority: **22.05.84 JP 101886/84**

(43) Date of publication of application:
**27.12.85 Bulletin 85/52**

(45) Publication of the grant of the patent:
**04.03.92 Bulletin 92/10**

(84) Designated Contracting States:
**DE FR GB IT**

(56) References cited:
**US-A- 4 016 544**

(73) Proprietor: **International Business Machines Corporation**
**Old Orchard Road**
**Armonk, N.Y. 10504(US)**

(72) Inventor: **Aoki, Yutaka Room No. 505**
**Kugenuma Flower Mansion 2-1-2, Ishigami**
**Kugenuma Fujisawa-shi Kanagawa-ken(JP)**
Inventor: **Watanabe, Shinpei**
**1566-305, Naramachi Midori-ku**
**Yokohama-shi Kanagawa-ken(JP)**

(74) Representative: **Herzog, Friedrich Joachim, Dipl.-Ing.**
**IBM Deutschland GmbH Schönaicher Strasse 220**
**W-7030 Böblingen(DE)**

## Description

The present invention relates to a color image display apparatus having an image memory that is constituted by a number of memory planes corresponding to displayed colors, and more particularly to a color image display apparatus having a variable memory plane configuration.

An image memory for color images is generally constructed by a number of memory planes corresponding to the displayed colors to store a plurality of image information bits per pixel. For example, when the three primary colors are used, up to eight colors can be displayed by memory planes of red, green and blue. Generally, $2^n$ are types of colors that can be displayed by n memory planes. Although the value of n is fixed in a conventional color image display, flexibility of image display is increased by constituting the memory plane in a variable configuration as described in Japanese Published Unexamined Patent Application 58-55984.

A problem with using memory planes of variable configuration is that operations of an interface between a CPU and a display must be constant regardless of the plane configuration as seen from the outside. For example, when the size of each memory plane is doubled (their number is halved), the size of the bus between the memory planes and a circuit for reading from and writing into the image memory (hereinafter called R/W circuit) should also be doubled so that the R/W time of the memory is constant. However, since physically the bus size is fixed, it has been required to provide a separate R/W circuit for each bus size and to selectively connect it to the memory so as to cope with the variable size of the bus between the R/W circuits and the memory.

Therefore, the main object of the present invention is to provide a color image display apparatus that can cope with different bus sizes using a single R/W circuit.

This object is solved in advantageous manner in accordance with the invention in that a plurality of color corresponding memory planes forming an image memory are simultaneously addressed by a common address from a CPU so as to either write image data on data busses respectively connected thereto or read image data out on these data busses; the image data to be written in the image memory are distributed to the data bus of each memory plane in the R/W circuit; these image data are written in a memory plane or planes that are selected by first selecting means; reading is simultaneously performed in each memory plane, and the read image data are loaded in read registers that are provided for the respective memory planes; the contents of a read register or registers among them that are selected by second selecting means are outputted to the CPU.

The invention provides the basic advantage that a single read/write circuit can cope with any mode.

Following the invention is described in more detail in connection with an example shown in the drawing, in which

Fig. 1A    is a block diagram showing a plane configuration of a four plane mode;

Fig. 1B    is a block diagram showing a plane configuration of a two plane mode;

Fig. 1C    is a block diagram showing a plane configuration of a one plane mode, and

Fig. 2    is a block diagram showing the details of R/W circuit 10.

Although an embodiment being described is arranged to have four memory planes (hereinafter simply called "plane"), in each of which an eight bit (one byte) writing or reading is simultaneously performed by a common address, of course this invention is not limited to such values.

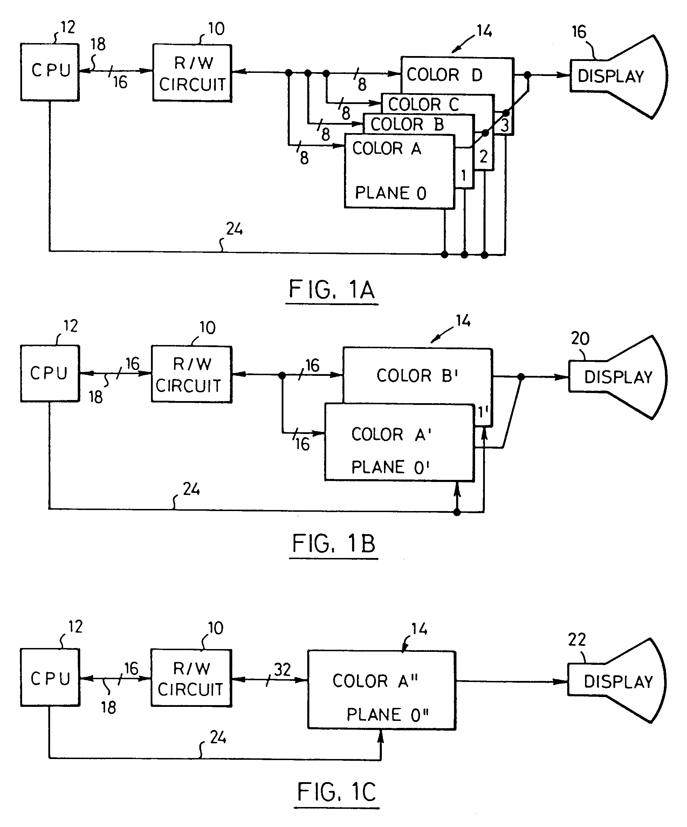

First, a concept of the multi-plane mode is described. Figs. 1A, 1B and 1C show configurations for a four plane mode, a two plane mode and a one plane mode, respectively. In any mode, the same R/W circuit 10 may be used. The four plane mode and the two plane mode are for color display, while the one plane mode is for monochrome display but the color display (two colors other than black and white) is also possible. In response to commands from a CPU 12, the R/W circuit 10 performs writing from the CPU 12 to an image memory 14, and reading from the image memory 14 to the CPU 12. Each plane receives the same address from the CPU 12 through an address bus 24. When the image data stored in the image memory 14 are read out and displayed on a display 16, a display refresh circuit (not shown) separate from the R/W circuit 10 is used. However, since the display refresh circuit has no relation to the invention, it is not described herein.

When the writing is performed in the four plane mode of Fig. 1A from the CPU 12 to the image memory 14, the R/W circuit 10 distributes the image data fed from the CPU 12 through a 16 bit wide CPU bus 18 to the data busses of the respective planes 0 - 3, and simultaneously writes 8 bits in a selected plane or planes. In reading, image data are simultaneously read from each plane by 8 bits, and transferred to the CPU 12 by 16 bits. Four planes 0 - 3 constituting the image memory 14 correspond to different colors A - D, respectively, and therefore a color code being sent to the display 16 has four bits per pixel. This allows to display 16 colors. In short, in the four plane mode, four bit color codes for 8 pixels are simultaneously written in the image memory 14, or read therefrom.

In case of the two plane mode of Fig. 1B, the planes 0 - 3 for the four plane mode are arranged to make two pairs of planes so that new double sized planes 0' and 1' are formed. However, since the number of planes are reduced to two, only four colors can be displayed. Writing and reading of the planes 0' and 1' are performed by 16 bits. In the two plane mode, a display 20 having more dots than the display 16 can be attached.

Although the displays 16 and 20 are color displays, a display 22 may be a monochrome display in the one plane mode of Fig. 1C. Although only two colors can be displayed in the one plane mode, it is possible to display on a larger screen because its plane size is four times of the original one. Writing and reading of the plane 0" are performed by 32 bits.

Actually, the image memory 14 has a configuration (physical configuration) of Fig. 1A in any mode, and a configuration of Fig. 1B or 1C is logically realized by changing data handling.

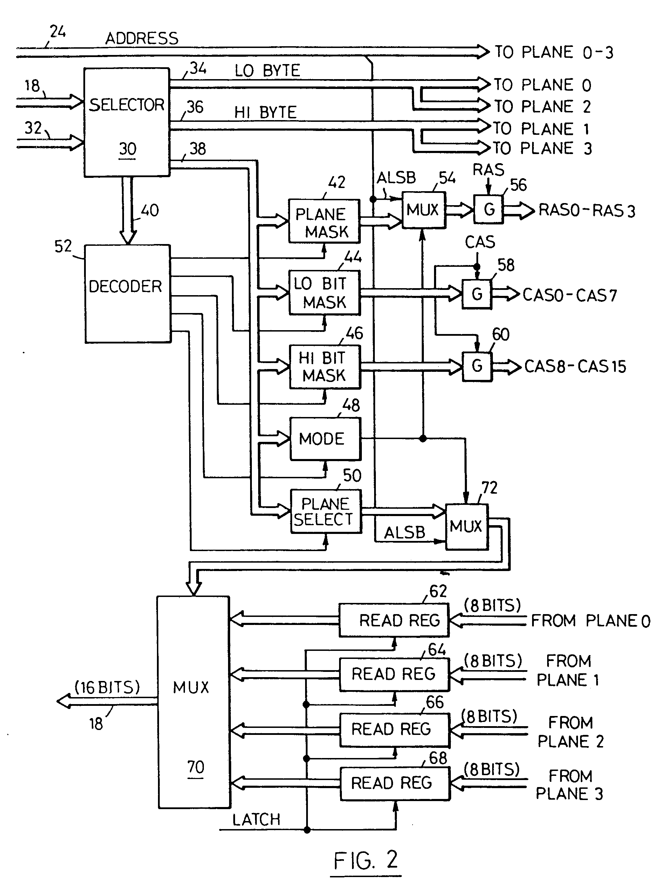

Now referring to Fig. 2, the R/W circuit 10 is described in detail.

In response to control signals on a control bus 32 from the CPU 12, a selector 30 feeds a 16 bit data on the CPU bus 18 either to a lower byte bus 34 and a higher byte bus 36, or to an internal bus 38 and a register address bus 40. The lower byte bus 34 is connected to the 8 bit data busses of the planes 0 and 2, while the higher byte bus 36 is connected to the 8 bit data busses of the planes 1 and 3.

The internal bus 38 is connected to a plurality of internal registers provided in the R/W circuit 10, namely to a plane mask register 42, a lower bit mask register 44, a higher bit mask register 46, a mode register 48 and a plane select register 50. The register address bus 40 is connected to a decoder 52. The decoder 52 decodes a register address from the register address bus 40, and supplies a load signal to a corresponding internal register. The data on the internal bus 38 is loaded only in an internal register that is also supplied with the load signal.

The plane mask register 42 is a 4 bit register in which bits 0 - 3 correspond to the planes 0 - 3 of the image memory 14, respectively, and indicate whether or not the corresponding planes are to be written. Each of the planes 0 - 3 is written with the image data from the lower byte bus 34 or the higher byte bus 36 only when the corresponding mask bit is 1. A multiplexer 54 passes the content of the plane mask register 42 toward a gate 56 in the color mode while in the monochrome mode, it generates either a mask signal allowing to write only to the planes 0 and 1, or a mask signal allowing to write only to the planes 2 and 3 in accordance with whether an ALSB signal supplied from the CPU 12 is 0 or 1, and feeds it to the gate 56. The ALSB is a specific bit (for example, the least significant bit) in the memory address commonly fed to the planes 0 - 3 of the image memory 14 from the CPU 12 through the address bus 24. The gate 56 passes a row address strobe signal RAS from the CPU 12 to only those planes for which the mask bit sent from the multiplexer 54 is 1.

Both the lower bit mask register 44 and the higher bit mask register 46 are 8 bit registers, and indicate which bits of the 8 bit image data on the lower byte bus 34 and the higher byte bus 36 are inhibited (masked) from being written. The contents of the registers 44 and 46 are supplied to the planes 0 and 2 (lower bit mask) and to the planes 1 and 3 (higher bit mask) as column address strobe signals CAS's through gates 58 and 60 that are conditioned by the CAS from the CPU 12.

The mode register 48 supplies a mode signal indicating either the color mode or the monochrome mode to the multiplexers 54 and 72.

The plane select register 50 specifies a plane or planes whose image data are read out to the CPU 12. When the mode signal applied from the node register 48 to the multiplexer 72 indicates the color mode, the content of the plane select register 50 is supplied to a bus multiplexer 70 through the multiplexer 72. In case of the monochrome mode, the multiplexer 72 generates a signal to read the image data from the planes 0 and 1, or a signal to read the image data from the planes 2 and 3 depending on whether the ALSB is 0 or 1, and feeds it to the bus multiplexer 70.

The 8 bit image data simultaneously read from the planes 0 - 3 are loaded in read registers 62, 64, 66 and 68 by a latch signal from the CPU, respectively. The bus multiplexer 70 gates to the CPU bus 18 the content of the read register selected by the plane select signal from the multiplexer 72.

In operation, the CPU 12 sends commands for initializing the internal registers of the R/W circuit to the selector 30 prior to the writing into the image memory 14 or the reading therefrom. Each of the command contains a register address specifying a register to be initialized, and initialization data to be loaded in the specified register. The register address is fed to the decoder 52 through the bus 40, whereby an internal register is selected and loaded with the initialization data on the internal bus 38.

The plane mask register 42 is set to all 1's when the 8 bit image data on the lower byte bus 34 and the 8 bit image data on the higher byte bus 36 (which may be the same as the lower byte) are simultaneously written in the planes 0 and 2 and the planes 1 and 3, respectively. If it is desired to write different 8 bit image data in the planes 0 - 3, the plane mask register 42 is, for example, first loaded with 1's at the bit positions corresponding to the planes 0 and 1, and with 0's at the bit positions corresponding to the planes 2 and 3. Thus, because the RAS signals from the gate 56 are supplied to only the planes 0 and 1, the image data on the the lower byte bus 34 is written only in the plane 0, and at the same time, the image data on the higher byte bus 36 is written only in the plane 1. Then, the mask bit values for the planes 0 and 1 and the planes 2 and 3 are reversed in the plane mask register 42, whereby another image data are simultaneously written in the planes 2 and 3. In the four plane mode, the same color data for 8 pixels can be sequentially written in the image memory 14 by setting the image data on the lower byte bus 34 and the higher byte bus 36 to all 1's or all 0's, and by loading the plane mask register 42 with a 4 bit value corresponding to a color code of a desired color.

The bit mask registers 44 and 46 are loaded with 1's at bit positions corresponding to image bits to be written out of 8 bits of the image data, and loaded with 0's at bit positions corresponding to image bits inhibited from being written. Although not shown in Fig. 2, an image can be moved to a specific direction on the display screen if a circuit is provided that shifts the image data read from the image memory 14 to the registers 62, 64, 66 and 68 by a predetermined amount, and its output is written back in the image memory 14 using the bit mask registers 44 and 46.

The mode register 48 is goaded with either 0 representing the color mode, or 1 representing the monochrome mode.

The plane select register 50 is loaded with a selection data that selects a register or registers out of the four read registers 62, 64, 66 and 68 whose contents are to be outputted to the CPU bus 18. When the image data from all the planes are read, first the contents of the registers 62 and 64 are simultaneously outputted to the lower and higher bytes of the CPU bus 18, respectively, and then the contents of the registers 66 and 68 are outputted in a similar manner, in response to the selection signal from the multiplexer 72 in which the mode signal is ignored. When a selection data that specifies reading of only a specific plane is loaded in the plane select register 50, only the content of a register corresponding to this plane is continuously outputted to the CPU bus 18.

According to the invention, a single R/W circuit can cope with any mode.

## Claims

1. A color image display apparatus comprising:

an image memory (14) constituted by a plurality of memory planes (0, 1, 2, 3) corresponding to colors (A, B, C, D) to each of which a data bus (34, 36) is connected,

a display (16, 20, 22) visually displaying image data stored in said image memory,

a CPU bus (18) connected to a CPU (12),

means for distributing (10) the image data on said CPU bus to each of data busses for said memory planes at the time of writing,

first selection means for selecting one or more memory planes from said plurality of memory planes, which are simultaneously written with said image data,

a plurality of read registers (62, 64, 66, 68) provided for said memory planes, respectively, and

second selecting means (48) for selecting in accordance with the selection as made by said first selection means one or more read registers from said plurality of read registers, the contents of which are simultaneously outputted to said CPU bus at the time of reading, said apparatus being adapted for operation in a selectively variable memory plane configuration in which writing or reading is simultaneously performed using a common address for each of the plurality of memory planes thus selected.

2. Color image display apparatus as claimed in claim 1, wherein said first selecting means is constituted by a register (42) having the same number of bit positions as said memory planes, and loaded with mask information from said CPU prior to writing.

## Revendications

1. Dispositif d'affichage d'images en couleur, comprenant:

une mémoire d'images (14) constituée d'une pluralité de plans de mémoire (0, 1, 2, 3) correspondant aux couleurs (A, B, C, D), chacun d'eux étant connecté à un bus de données (34, 36),

une unité d'affichage (16, 20, 22) affichant optiquement des données d'image emmagasinées dans ladite mémoire d'images,

un bus CPU (18) connecté à une unité CPU (12),

des moyens pour répartir (10) les données d'image dans ledit bus CPU sur chacun desdits bus de données pour lesdits plans de mémoire au temps d'écriture,

des premiers moyens de sélection pour sélectionner à partir de ladite pluralité de plans de mémoire un ou plusieurs plans de mémoire dans lesquels sont simultanément écrites lesdites données d'image,

une pluralité de registres de lecture (62, 64, 66, 68) fournis respectivement auxdits plans de mémoire, et

des deuxièmes moyens de sélection (48) pour sélectionner, conformément à la sélection faite par lesdits premiers moyens de sélection, à partir de ladite pluralité de registres de lecture un ou plusieurs registres de lecture dont les contenus sont simultanément envoyés audit bus CPU au temps de lecture, ledit dispositif étant adapté pour fonctionner dans une configuration de plans de mémoire sélectivement variable où est accomplie simultanément une écriture ou une lecture en utilisant une adresse commune pour chacun des plans de ladite pluralité de plans de mémoire ainsi sélectionné.

2. Dispositif d'affichage d'images en couleur selon la revendication 1, dans lequel lesdits premiers moyens de sélection sont constitués d'un registre (42) ayant le même nombre de positions de bit que lesdits plans de mémoire, et chargé d'une information de masque provenant de ladite unité CPU avant l'écriture.

**Patentansprüche**

1. Farbbild-Sichtgerät enthaltend:

ein Bildspeicher (14), der durch eine Vielzahl von Speicherebenen (0, 1, 2, 3) gebildet wird, die den Farben (A, B, C, D) entsprechen und jeweils mit einem Datenbus (34, 36) verbunden sind,

einen Bildschirm (16, 20, 22) zur sichtbaren Anzeige des Bildes, welches in besagtem Bildspeicher gespeichert ist,

einen CPU-Bus (18), welcher mit einer CPU (12) verbunden ist,

Mittel zur Verteilung (10) der Bilddaten auf genanntem CPU-Bus zu jedem der Datenbusse für die genannten Speicherebenen zum Zeitpunkt des Einschreibens,

erste Auswahlmittel für die Auswahl einer oder mehrerer Speicherebenen aus der genannten Vielzahl von Speicherebenen, die simultan mit genannten Bilddaten beschrieben werden,

einer Vielzahl von Leseregistern (62, 64, 66, 68), die für die genannten Speicherebenen vorgesehen sind und

zweite Auswahlmittel (48) für die Auswahl einer oder mehrerer der Leseregister aus der genannten Vielzahl der Leseregister in Übereinstimmung mit der Auswahl, die durch genannte erste Auswahlmittel getroffen ist, wobei der Inhalt der Leseregister simultan zu genanntem CPU-Bus zum Einschreibzeitpunkt ausgegeben wird,

wobei das Gerät in der Lage ist, in einer selektiv variablen Speicherebenen-Konfiguration zu arbeiten, in welcher Schreiben oder Lesen simultan durchgeführt wird unter Benutzung einer gemeinsamen Adresse für jede aus der Vielzahl von Speicherebenen ausgewählten Ebene.

2. Farbbild-Sichtgerät gemäß Anspruch 1, wobei genanntes erstes Auswahlmittel durch ein Register (42) gebildet wird, welches die gleiche Anzahl von Bitpositionen aufweist, wie Speicherebenen vorhanden sind, und das mit Maskeninformationen von genanntem CPU vor dem Einschreiben geladen wird.

FIG. 1A

FIG. 1B

FIG. 1C

FIG. 2